# EUROPEAN PATENT APPLICATION

(11) **EP 2 869 232 A1**
(43) Date of publication of application: **06.05.2015**
(21) Application number: 14191682.5
(22) Date of filing: 04.11.2014
(51) Int. Cl.: G06F 21/60

(54) **Security key device for secure cloud services, and system and method of providing security cloud services**

(30) Priority: 04.11.2013 KR 20130132936
(71) Applicant: SaferZone Co., Ltd., Daejeon (KR)
(72) Inventor: Lee, Dong-Woon, Seoul (KR); Choi, Jae Sik, Daejeon (KR); Son, Won-Jang, Gyeonggi-do (KR)
(74) Representative: Greenaway, Martin William

(57) **Abstract**

Disclosed is a security key device for cloud services. The security key device includes an interface unit that provides an interface with the user terminal, a storage unit that stores an encrypted user file, and an encryption/decryption conversion support controller that encrypts, when a file to be uploaded to a cloud server is received from the user terminal, the received file and stores the encrypted file in the storage unit to transmit the encrypted file to the user terminal, and stores, when an encrypted file downloaded from the cloud server is received from the user terminal, the received encrypted file in the storage unit and decrypts the encrypted file to transmit the decrypted file to the user terminal. Even when a cloud server is hacked, individual and company's important data cannot be opened, encryption/decryption is processed in a hardware encryption accelerator, and therefore it is possible to prevent leakage of an encryption key even when a personal PC is hacked, thereby significantly improving security compared to the related art.

## Description

### CROSS-REFERENCE TO RELATED APPLICATION

This application claims priority to and the benefit of Korean Patent Application No. 10-2013-0132936, filed on November 4, 2013, the disclosure of which is incorporated herein by reference in its entirety.

### BACKGROUND

### 1. Field of the Invention

The present invention relates to a security key device for providing cloud services in which security is enhanced and a system and an operating method using the same, and more particularly, to technologies which may manage an encryption key in a hardware security key device detachably connected to a user terminal, and an encryption engine may encrypt and decrypt a file in a hardware embedded device to store the encrypted and decrypted file in a cloud server, thereby enhancing security.

### 2. Discussion of Related Art

In recent years, a cloud computing environment has been widely used for the purpose of efficient distribution of IT resources and secure storage of data. The concept of cloud computing was already advocated by John McCarthy who was an American computer scientist in the 1960s. In addition, communication infrastructure is recently rapidly getting better and demands for efficiently distributing resources of the computing environment are increased, and therefore development and a development speed of cloud computing are increased.

In the cloud computing environment, a user does not need a high specification terminal, and therefore IT equipment investment costs at a client level can be reduced, and IT resources according to a use environment can be efficiently distributed. However, when a server in the cloud computing is hacked, there is a risk of data leakage, and there is a problem in security in that important data of a user is highly likely to be leaked by malignity on a service provider side that provides cloud computing services.

In particular, as the cloud services are activated even in a mobile environment such as a smartphone in addition to in a PC environment, there is an urgent demand for addressing a security problem due to hacking of a cloud server.

For this, in Korean Patent No. 10-1107056, etc., a method in which a synchronized file is encrypted in advance to be transmitted to a cloud serer before the corresponding file is transmitted from a client terminal to the cloud server, the encrypted file is received from the cloud server, and then the received encrypted file is decrypted in the client terminal again is used.

In some conventional products using this method, a method of directly managing an encryption key in a Windows agency application program to perform encryption as a software algorithm module, and a method of encrypting a file in software using an encryption key stored in a hardware device are used.

The conventional file encryption method for security enhancement in the cloud services in this manner is a method in which encryption is performed through software, and therefore there is a problem in security in that the encryption key is managed in a Windows program and likely to be exposed by a monitor program of hackers.

### SUMMARY OF THE INVENTION

The present invention is directed to a security key device for cloud services in which encryption of a file as well as storage of an encryption key are performed in a security key device connected to a user terminal to thereby prevent leakage of a security key by hacking, and synchronization is possible by encrypting and decrypting a cloud file only in a case in which the security key device is connected to the user terminal, there further improving security.

According to an aspect of the present invention, there is provided a security key device for cloud services, including: an interface unit that is detachably connected to a user terminal, and provides an interface with the user terminal; a storage unit that is divided into a general data storage region and an encrypted file storage region, and stores an encrypted user file; and an encryption/decryption conversion support controller that encrypts, when a file to be uploaded to a cloud server is received from the user terminal, the received file and stores the encrypted file in the storage unit to transmit the encrypted file to the user terminal, and stores, when an encrypted file downloaded from the cloud server is received from the user terminal, the received encrypted file in the storage unit and decrypts the encrypted file to transmit the decrypted file to the user terminal.

According to another aspect of the present invention, there is provided a system that shares a user file through cloud services, including: a cloud server that provides cloud services for sharing of the user file; a user terminal in which an agent for providing security cloud services is installed; and a security key device that is detachably connected to the user terminal to be operated in a state of being connected to the user terminal, encrypts, when a file to be uploaded to the cloud server is received from the agent, the received file to transmit the encrypted file to the agent, and decrypts, when an encrypted file downloaded from the cloud server is received from the agent, the received encrypted file to transmit the decrypted file to the user terminal. Here, the agent may generate a security synchronization folder for security cloud synchronization, transmit, when a specific file within the terminal is moved to the security synchronization folder, the file to the security key device, and transmit, when the encrypted file is received from the security key device, the encrypted file to the cloud server.

According to still another aspect of the present invention, there is provided a method of providing cloud services in an agent installed in a user terminal, including: detecting connection of a security key device; executing a user authentication process when the connection of the security key device is detected; transmitting, when a specific file within the user terminal is moved to a cloud encryption synchronization folder, the specific file to the security key device; storing, when an encrypted file is received from the security key device, the received encrypted file in the cloud encryption synchronization folder; transmitting the encrypted file stored in the cloud encryption synchronization folder through cloud synchronization to a cloud server; transmitting, when the encrypted file is received from the cloud server, the received encrypted file to the security key device; receiving a decrypted file from the security key device; and storing the decrypted file in the cloud encryption synchronization folder.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is a configuration diagram illustrating a system of providing security cloud services according to an exemplary embodiment of the present invention;
FIG. 2 is a block diagram illustrating a detailed configuration of a security key device of FIG. 1;
FIG. 3 is a flowchart illustrating a pre-process for the use of a security key device in a PC environment;
FIG. 4 is a flowchart illustrating a process of encrypting a file using a security key device in a PC environment and transmitting the encrypted file to a cloud server;
FIG. 5 is a flowchart illustrating a process of opening a file using cloud services in a mobile environment;
FIG. 6 is a diagram illustrating a process of encrypting a file in a security key device when the file is uploaded; and
FIG. 7 is a diagram illustrating a process of decrypting a file in a security key device when the file is downloaded.

### DETAILED DESCRIPTION OF EXEMPLARY EMBODIMENTS

Example embodiments of the present invention are disclosed herein. However, specific structural and functional details disclosed herein are merely representative for purposes of describing example embodiments of the present invention, and example embodiments of the present invention may be embodied in many alternate forms and should not be construed as being limited to example embodiments of the present invention set forth herein.

Accordingly, while the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, integers, steps, operations, elements, components, and/or groups thereof, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, preferred embodiments of the present invention will be described in detail with reference to the accompanying drawings.

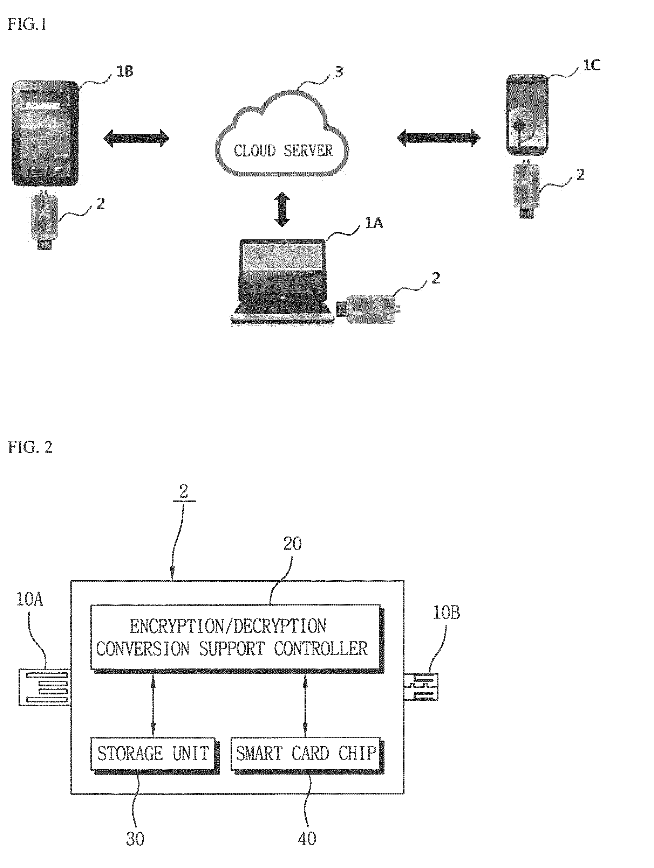

FIG. 1 is a configuration diagram illustrating a system of providing security cloud services according to an exemplary embodiment of the present invention, and FIG. 2 is a block diagram illustrating a detailed configuration of a security key device of FIG. 1.

As illustrated in FIG. 1, a system of providing security cloud services according to an embodiment of the present invention includes a user terminal 1, a security key device 2, and a cloud server 3.

The user terminal 1 is a device in which a user file is stored, and means a variety of terminals which have a storage and display function of files and a communication environment capable of being connected to the Internet such as a PC, a notebook, a tablet PC, a smartphone, and the like. In FIG. 1, reference numeral 1A denotes a PC, reference numeral 1B denotes a table PC, and reference numeral 1C denotes a smartphone. In the user terminal 1, an agent for providing security cloud services according to the present invention is installed. As will be described later, when a user encrypts a file and stores the encrypted file in the cloud server 3, the agent detects whether the security key device 2 is connected to the user terminal 1 and enhances security by starting to perform a file encryption operation only when the security key device 2 is connected to the user terminal 1.

The security key device 2 is detachably connected to the user terminal 1 to be operated in a state of being connected to the user terminal 1, and when a file is uploaded, the security key device 2 encrypts a file received from the agent to transmit the encrypted file to the agent. When a file is downloaded, the security key device 2 receives an encrypted file downloaded from the cloud server 3 from the agent, and decrypts the received encrypted file to transmit the decrypted file to the agent.

The cloud server 3 is a device that provides cloud services for sharing of a user file, and stores contents in an address book or the like for file documents of media such as movies, photos, music, and the like and downloads the content stored in the server from the user terminal when there is a request from the user terminal including a user PC, a smartphone, or a smart TV. As examples of domestic cloud services, Naver N drive, KT ucloud, and Daum cloud are given, and as examples of foreign cloud services, Drop box, Box, Sugar sync, Google drive, Sky drive, and the like may be given.

In FIG. 2, a detailed configuration of the security key device 2 is illustrated. As illustrated in FIG. 2, the security key device 2 includes interface units 10A and 10B, an encryption/decryption conversion support controller 20, a storage unit 30, and a security authentication chip 40.

Each of the interfaces units 10A and 10B is a connector for electrically connecting the security key device 2 to the user terminal 1, and as an example of the interface in FIG. 2, a USB connector 10A and a micro USB connector 10B are shown, but other various interface devices may be used.

The encryption/decryption conversion support controller 20 executes encryption and decryption of a file through an encryption key and an encryption/decryption engine block stored therein, and executes a control operation for backup of data when the security key device 2 according to the present invention is used as a backup memory. In addition, when the security key device 2 is connected to the user terminal 1, the encryption/decryption conversion support controller 20 executes user authentication through the security authentication chip 40 and performs an encryption operation only when the user authentication is executed.

The storage unit 30 is used to store user data, and a storage region of the storage unit 30 is divided into a plurality of regions. Here, the partial region may be used as a general storage region, and an encrypted file may be stored in the remaining partial region. The storage unit 30 includes a flash memory used as a general USB memory and a variety of storage media.

The security authentication chip 40 is a chip that executes user authentication to provide a security function when the security key device 2 is connected to the user terminal 1, and may store at least one of password information, user fingerprint information, an one time password (OTP) generation module for generating an OTP value as user authentication means.

The password information is password information set in advance by a user, and is information separately from an encryption key. For the purpose of user authentication through user fingerprint information, a fingerprint recognition device should be installed inside or outside the security key device 2. The OTP generation module generates an OTP value using an arbitrary random value, an increased value, or a time as an input value of an encryption algorithm, and transmits the generated OTP value to an authentication server to authenticate a user.

Through such a multi-authentication process, it is possible to enhance security of the security key device.

In this manner, the security of the security key device is improved through the multi-authentication process, but there is a problem in that an encrypted file uploaded to the cloud server 3 cannot be opened when a user loses the security key device 2. Thus, for a user and co-workers who are concerned about this problem and for companies and organizations using at least two security key devices, a plurality of products having the same encryption key may be sold and provided, thereby taking measures against loss of the encryption key device.

In addition, in order to manage the history of a file that proceeds in the form of co-operation of many people, it is possible to manage the history of the file in conjunction with separate agency server services. That is, a plurality of security key devices for co-users use the single same encryption key, but by allocating identification information for identifying each device to each security key device, it is possible to manage the histories concerning about which user finally modifies the file on which co-operation is performed, when the copy is performed, and the like.

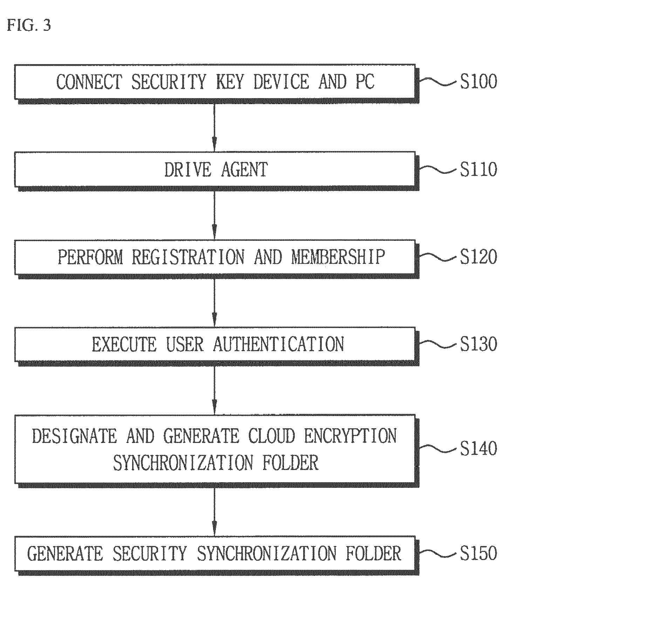

FIG. 3 is a flowchart illustrating a pre-process for the use of a security key device in a PC environment.

When the security key device 2 is connected to a user PC in operation S100, an agent installed in the user PC is driven in operation S110. The agent is used to provide security cloud services in conjunction with the security key device 2. When a file to be encrypted is recognized at the time of cloud synchronization, the agent is a program produced in such a manner that the recognized file is transmitted to the security key device 2 so that the file is encrypted in a hardware manner, an encrypted file downloaded from the cloud server 3 is decrypted through the security key device 2, and an automatic encryption operation and an automatic encryption releasing operation are performed depending on whether the security key device 2 is connected to the user PC.

When the agent is driven, the user PC is connected to the homepage of a manufacturer of the security key device 2 to induce a corresponding user to perform user registration and join membership in the corresponding homepage in operation S120, and then user authentication is executed in operation S130. The user authentication may be executed in various methods such as password, fingerprint information, OTP, and the like as described above.

Next, the agent guides the user to designate or generate a cloud encryption synchronization folder to be synchronized with the cloud server 3 in operation S140. Here, the cloud encryption synchronization folder may be transmitted to the cloud server 3 after all files to be stored in the corresponding folder are encrypted.

Alternatively, the cloud encryption synchronization folder may be classified into a general synchronization folder for transmitting a corresponding file to the cloud server 3 without an encryption process and a security synchronization folder for encrypting a corresponding file and uploading the encrypted file to the cloud server 3. In this case, the agent may generate a security synchronization folder as a lower level folder of the cloud encryption synchronization folder, and perform a security cloud service operation only on a file to be stored in the security synchronization folder in operation S150.

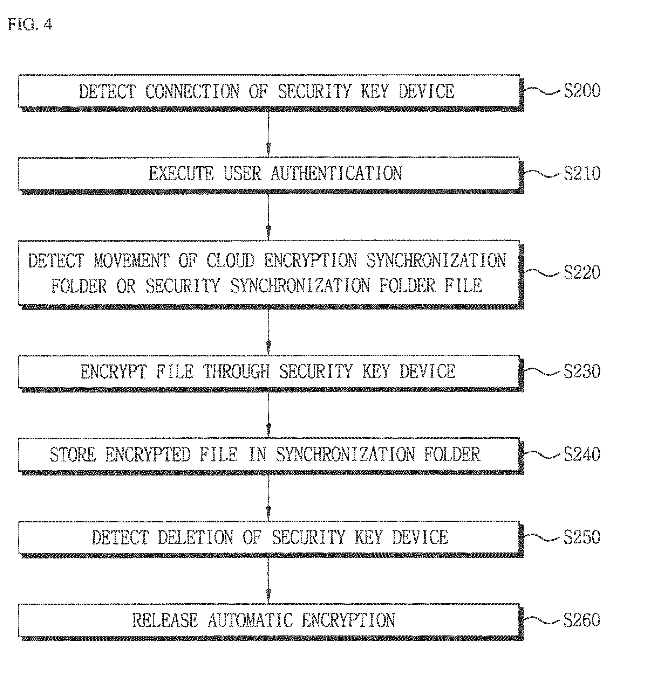

FIG. 4 is a flowchart illustrating a process of encrypting a file using a security key device in a PC environment and transmitting the encrypted file to a cloud server.

An agent installed in a user PC detects whether the security key device 2 is connected to the user PC in operation S200, and executes user authentication when it is detected that the security key device 2 is connected to the user PC in operation S210.

As described in FIG. 3, in operation S220, the agent detects whether a corresponding file is moved to the cloud encryption synchronization folder or the security synchronization folder according to an encryption target range of a file to be synchronized as described in FIG. 3. In operation S230, when a specific file is moved to the corresponding folder, the agent transmits the corresponding file to the security key device 2 to encrypt the transmitted file. That is, when an target to be encrypted is the whole of the cloud encryption synchronization folder, whether there is a file moved to the cloud encryption synchronization folder is detected, and when an target to be encrypted is limited to the security synchronization folder, whether there is a file moved to the security synchronization folder.

In operation S240, when an encrypted file is received from the security key device 2, the agent stores the received encrypted file in the corresponding folder. The encrypted file is stored in the cloud encryption synchronization folder or the security synchronization folder that is a lower level folder of the cloud encryption synchronization folder according to the encryption target range, and in each case, the file stored in the corresponding folder is transmitted to the cloud server 3 by execution of a cloud application.

When deletion of the security key device 2, that is, connection release of the security key device 2 is detected while such an automatic encryption operation is performed in operation S250, the agent releases automatic encryption and deletes files within the corresponding folder to prevent synchronization with the cloud server 3.

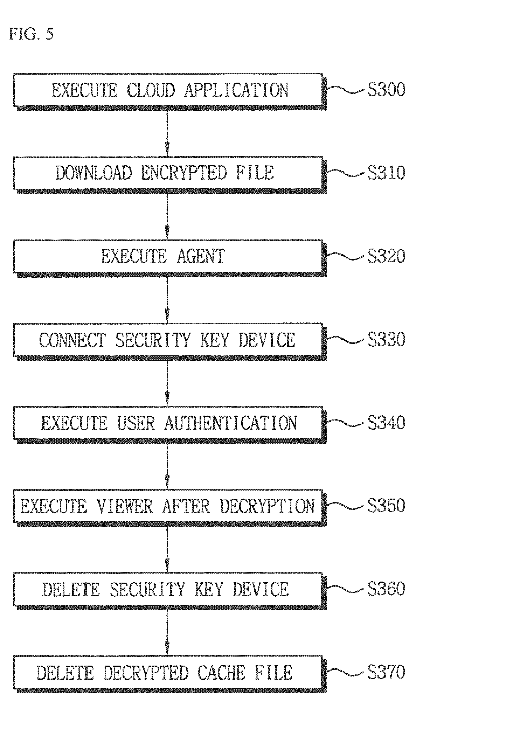

FIG. 5 is a flowchart illustrating a process of opening a file using cloud services in a mobile environment.

First, a cloud application for providing cloud services is executed in operation S300, and an encrypted file is downloaded from the cloud server 3 to a mobile terminal in operation S310.

When the encrypted file is received, an agent for security cloud services is driven in operation S320, and monitors whether the security key device 2 is connected to the mobile terminal.

When the security key device 2 is connected to the mobile terminal in operation S330, user authentication is executed in operation S340, and when the user authentication is completed, the agent transmits the received encrypted file to the security key device 2 to thereby decrypt the encrypted file to obtain the original file, and then executes a viewer program through which the corresponding file can be opened to thereby display the decrypted file on a screen in operation S350.

When deletion of the security key device 2, that is, connection release of the security key device 2 is detected in operation S360 while such a download file execution operation is performed, the agent releases automatic decryption and deletes decrypted cache files within the corresponding folder to thereby prevent execution of the corresponding file in operation S370.

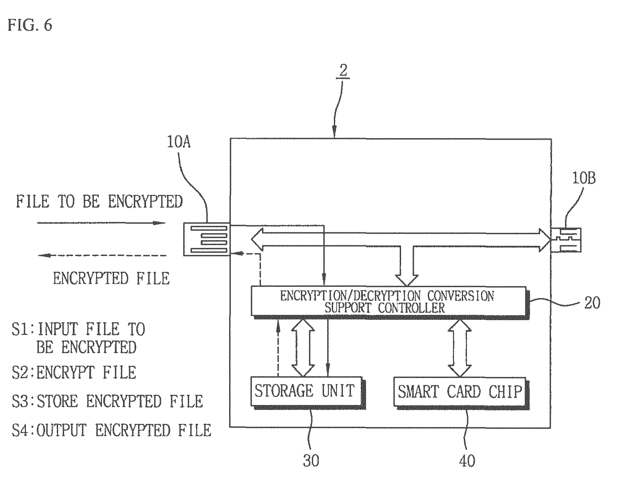

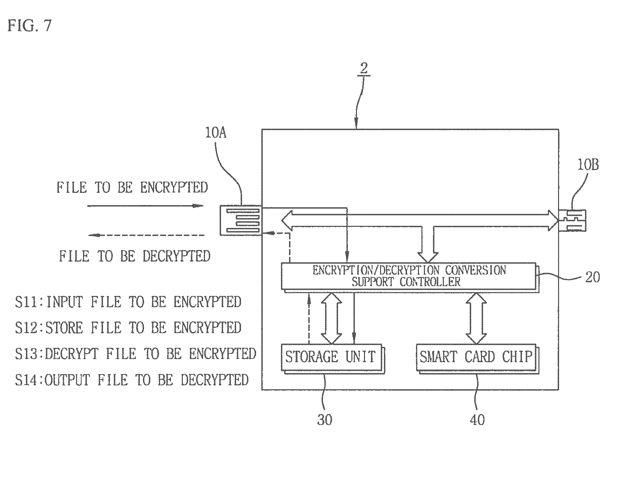

FIG. 6 is a diagram illustrating a process of encrypting a file in a security key device when the file is uploaded, and FIG. 7 is a diagram illustrating a process of decrypting a file in a security key device when the file is downloaded. In FIGS. 6 and 7, a case in which the user terminal 1 is connected to a USB connector 10A is exemplarily illustrated.

First, referring to FIG. 6, when a file is uploaded, a data flow from an agent to the security key device 2 is indicated by a solid-line arrow, and a data flow from the security key device 2 to the agent is indicated by a dotted-line arrow.

When an original file to be uploaded is input from the agent in operation S 1, the encryption/decryption conversion support controller 20 encrypts the received original file in operation S2, stores the encrypted file in the storage unit 30 in operation S3, and then moves the encrypted file stored in the storage unit 30 to the agent in operation S4.

Next, referring to FIG. 7, when a file is uploaded, a data flow from an agent to the security key device 2 is indicated by a solid-line arrow, and a data flow from the security key device 2 to the agent is indicated by a dotted-line arrow.

When an encryption file downloaded from the cloud server 3 is input from the agent in operation S11, the encryption/decryption conversion support controller 20 passes through the received encryption file to store the encryption file in the storage unit 30 in operation S12, decrypts the encrypted file stored in the storage unit 30 in operation S13, and moves the decrypted file to the agent in operation S14.

According to the present invention, even when the cloud server is hacked, individual and company's important data cannot be opened, encryption/decryption is processed in a hardware encryption accelerator, and therefore it is possible to prevent leakage of an encryption key even when a personal PC is hacked, thereby significantly improving security compared to the related art.

It will be apparent to those skilled in the art that various modifications can be made to the above-described exemplary embodiments of the present invention without departing from the spirit or scope of the invention. Thus, it is intended that the present invention covers all such modifications provided they come within the scope of the appended claims and their equivalents.

## Claims

1. A security key device for cloud services, comprising:
an interface unit that is detachably connected to a user terminal, and provides an interface with the user terminal;
a storage unit that is divided into a general data storage region and an encrypted file storage region, and stores an encrypted user file; and
an encryption/decryption conversion support controller that encrypts, when a file to be uploaded to a cloud server is received from the user terminal, the received file and stores the encrypted file in the storage unit to transmit the encrypted file to the user terminal, and stores, when an encrypted file downloaded from the cloud server is received from the user terminal, the received encrypted file in the storage unit and decrypts the encrypted file to transmit the decrypted file to the user terminal.

2. The security key device for cloud services of claim 1, further comprising:
a security authentication chip that includes at least one of password information for user authentication, user fingerprint information, an one time password (OTP) generation module for generating an OTP value,
wherein the encryption/decryption conversion support controller is operated only when user authentication is executed through the security authentication chip.

3. A system that shares a user file through cloud services, comprising:
a cloud server that provides cloud services for sharing of the user file;
a user terminal in which an agent for providing security cloud services is installed; and
a security key device that is detachably connected to the user terminal to be operated in a state of being connected to the user terminal, encrypts, when a file to be uploaded to the cloud server is received from the agent, the received file to transmit the encrypted file to the agent, and decrypts, when an encrypted file downloaded from the cloud server is received from the agent, the received encrypted file to transmit the decrypted file to the user terminal,
wherein the agent generates a security synchronization folder for security cloud synchronization, transmits, when a specific file within the terminal is moved to the security synchronization folder, the file to the security key device, and transmits, when the encrypted file is received from the security key device, the encrypted file to the cloud server.

4. The system of providing security cloud services of claim 3, wherein the agent generates a security synchronization folder as a lower-level folder of a synchronization folder for cloud synchronization, monitors file input and output of the security synchronization folder in real time, encrypts the file through the security key device when the file is moved to the security synchronization folder, and stores the encrypted file in the security synchronization folder.

5. A method of providing cloud services in an agent installed in a user terminal, comprising:
detecting connection of a security key device;
executing a user authentication process when the connection of the security key device is detected;
transmitting, when a specific file within the user terminal is moved to a cloud encryption synchronization folder, the specific file to the security key device;
storing, when an encrypted file is received from the security key device, the received encrypted file in the cloud encryption synchronization folder;
transmitting the encrypted file stored in the cloud encryption synchronization folder through cloud synchronization to a cloud server;
transmitting, when the encrypted file is received from the cloud server, the received encrypted file to the security key device;
receiving a decrypted file from the security key device; and
storing the decrypted file in the cloud encryption synchronization folder.

6. The method of providing security cloud services of claim 5, further comprising;
releasing automatic encryption and deleting a decrypted temporary file when connection release of the security key device is detected.

7. The method of providing security cloud services of claim 5, wherein the agent generates a security synchronization folder in a lower level of the cloud encryption synchronization folder, and executes encryption through the security key device only with respect to a file moved to the security synchronization folder.
